(19) **Europäisches Patentamt** / **European Patent Office** / **Office européen des brevets**

(11) **EP 2 454 693 B1**

(12) **EUROPEAN PATENT SPECIFICATION**

(45) Date of publication and mention
of the grant of the patent:
**01.01.2014 Bulletin 2014/01**

(21) Application number: **09847431.5**

(22) Date of filing: **15.07.2009**

(51) Int Cl.:
*G06F 17/50* [(2006.01)]     *B60C 11/03* [(2006.01)]
*B60C 99/00* [(2006.01)]

(86) International application number:
**PCT/US2009/050659**

(87) International publication number:
**WO 2011/008203 (20.01.2011 Gazette 2011/03)**

(54) **METHOD OF IMPROVING TREAD NOISE**

VERFAHREN ZUR MINDERUNG VON LAUFFLÄCHENGERÄUSCHEN

PROCÉDÉ D'ATTÉNUATION DU BRUIT DE BANDE DE ROULEMENT

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**23.05.2012 Bulletin 2012/21**

(73) Proprietors:
• **MICHELIN Recherche et Technique S.A.**
  **1763 Granges-Paccot (CH)**
• **Compagnie Générale des Etablissements
  Michelin
  63000 Clermont-Ferrand (FR)**

(72) Inventors:
• **ZHU, Fang
  Greer
  SC 29650 (US)**
• **BIESSE, Frederic Xavier, Francis
  03800 Monteignet sur L'andelot (FR)**
• **VAISSAUD, Julien, Alexandre
  3080 Tervuren (BE)**

(74) Representative: **Dossmann, Gérard
  Casalonga & Partners
  Bayerstrasse 71-73
  80335 München (DE)**

(56) References cited:
US-A- 4 598 748     US-A1- 2007 078 633
US-B1- 6 430 993     US-B1- 6 514 366

EP 2 454 693 B1

**Description**

## FIELD OF THE INVENTION

The present invention relates to a method of improving tread noise and, more specifically, to a method of identifying locations where the tread pattern should be particularly modified in order to optimize the level of noise created by the tread during tire operation.

## BACKGROUND OF THE INVENTION

In addition to performance criteria such as wear, traction, and rolling resistance, tire manufacturers are also concerned with the noise generated by a tire during its operation, which includes a range of speeds and load. While complete elimination of the noise generated by a tread pattern may not be currently feasible, the reduction or optimization of the noise level generated by a tread pattern is desirable. Such treatment of the noise level can improve passenger comfort and, therefore, customer satisfaction.

Unfortunately, the precise mechanism by which sound is created by a tread during tire operation is both complex and perhaps not yet completely explored. The investigation of the physics behind tread noise is further complicated by the subjective nature of the inquiry i.e., differences of opinion may arise regarding the acceptability of both the type and level of noise created. Additionally, a substantial expense can arise in the manufacture and noise testing of tires having different proposed tread patterns due to e.g., new mold costs and the modification of molds between different patterns being tested.

Approaches for confronting the difficulties of designing tread patterns with acceptable noise levels have been proposed. For example, U.S. Patent No. 4,727,501, entitled "Method of Simulating Tire Tread Noise and Apparatus," describes transforming a proposed tread pattern from a digitized format to an analog signal that is subsequently converted into sound for a subjective, aural evaluation. The procedure is intended to allow for a more economical evaluation of the noise created with different tread patterns by providing an approach that avoids the expense of constructing a mold and curing a tire for each tread pattern being tested. A sound representative of a proposed tread pattern is generated for subjective consideration without necessarily constructing an actual tire bearing the tread pattern. However, the particular design modifications that should be undertaken to improve the noise associated with a given tread pattern are not described.

U.S. Patent No. 4,788,651, entitled "Method for Improving Tread Noise by Relative Rotation of a Rib and Simulating the Effect Thereof," describes the application of U.S. Patent No. 4,727,501 in order to improve the noise level associated with a tread having ribs. After a sound representative of a particular tread pattern has been generated, a rib of the tire tread is rotated relative to the other ribs to determine if an improvement results in the noise level associated with the tread pattern. Modifications to the tread pattern of any particular rib are not described. The analysis is also based on an assumption that the ribs do not significantly interact with each other. Additionally, application to tire treads that do not have ribs is also not indicated or described.

Accordingly, a method for improving tire tread noise would be useful. A method that also avoids the construction of multiple molds and tires bearing the tread patterns being tested would also be useful. A method that indicates the location and nature of modifications that can be made to improve the noise created by the operation of a particular tread pattern - including a pattern that does not include ribs - would be particularly useful.

## SUMMARY OF THE INVENTION

Objects and advantages of the invention will be set forth in part in the following description, or may be obvious from the description, or may be learned through practice of the invention. In one exemplary aspect of the invention, a method for improving the tread noise created by a tire is provided. For purposes of reference, it will be understood that the tread pattern defines a circumferential direction. Accordingly, the method includes the steps of selecting a portion of the tread pattern for evaluation, determining the variation in contact length ratio along the circumferential direction for the selected portion of the tread pattern, and reducing the variation in contact length ratio by modifying the tread pattern. These steps of selecting, determining, and reducing may also be repeated until an acceptable variation in contact length ratio is achieved for the selected portion of the tread pattern.

The method may also include additional steps and modifications. For example, the determining step may include calculating the contact length ratio at each point along the circumferential direction of the selected portion of the tread pattern and/or mapping the selected portion of the tread pattern. The determining step of this exemplary method of the present invention may also include mapping the selected portion of the tread pattern, calculating the contact length ratio at each point along the circumferential direction of the mapped tread portion of the tread pattern, and plotting the results of the calculating step for each point along the circumferential direction of the mapped tread portion of the tread pattern.

The reducing step may further include adding contact surfaces to the tread pattern at one or more points along the circumferential direction of the selected portion based on the variations in contact length ratio provided by the determining step. In addition or in alternative thereto, the reducing step may include removing contact surfaces from the tread pattern at one or more points along the circumferential direction of the selected portion based on the variations in contact length ratio provided by the determining step.

This exemplary method of the present invention may also include the step of determining the point along the circumferential direction of the selected portion of the tread pattern at which maximum variation in the contact length ratio occurs. Similarly, the method may include a step of determining the point along the circumferential direction of the selected portion of the tread pattern at which minimum variation in the contact length ratio occurs.

Various portions of the tread pattern may be selected for treatment by this exemplary method of the present invention. For example, one pitch of the tread pattern may be selected. However, other portions of the tread pattern may be selected as well.

While the contact length ratio may be defined variously as discussed herein, in one exemplary aspect of the present invention the contact length ratio at given point along the circumferential direction of the tread pattern is defined as

$$CLR_i = 1 - \frac{C_i}{n}$$

where

$CLR_i$ =    the contact length ratio at a given location $i$ along the circumferential direction

$C_i$ =    the total number of points contacting a road surface along a leading edge of the tread pattern at a given location $i$ along the circumferential direction

$n$ =    the total number of points on the leading edge

In another exemplary aspect, the present invention provides a method of improving tire tread noise. The method includes the steps of determining contact length ratios along a selected portion of the tread, comparing the contact length ratios to determine locations of maximum and minimum variations in the contact length ratios along a circumferential direction of the tread, and optimizing the noise to be produced in operation of the tire tread by modifying the maximum and minimum variations in the contact length ratios. The optimizing step may include modifying the tread pattern so as to change the contact length ratios at the locations of the maximum and minimum variations. For example, the optimizing step may include adding contact surfaces to the tread pattern at one or more locations along the circumferential direction, reducing contact surfaces of the tread pattern at one or more locations along the circumferential direction, or both. The steps of determining, comparing, and optimizing may be repeated until acceptable variations in contact length ratios are achieved for the selected portion of the tread pattern.

The present invention also includes a tire bearing a tread pattern constructed using any of the methods of the present invention.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

## BRIER DESCRIPTION OF THE DRAWINGS

A full and enabling disclosure of the present invention, including the best mode thereof, directed to one of ordinary skill in the art, is set forth in the specification, which makes reference to the appended figures, in which:

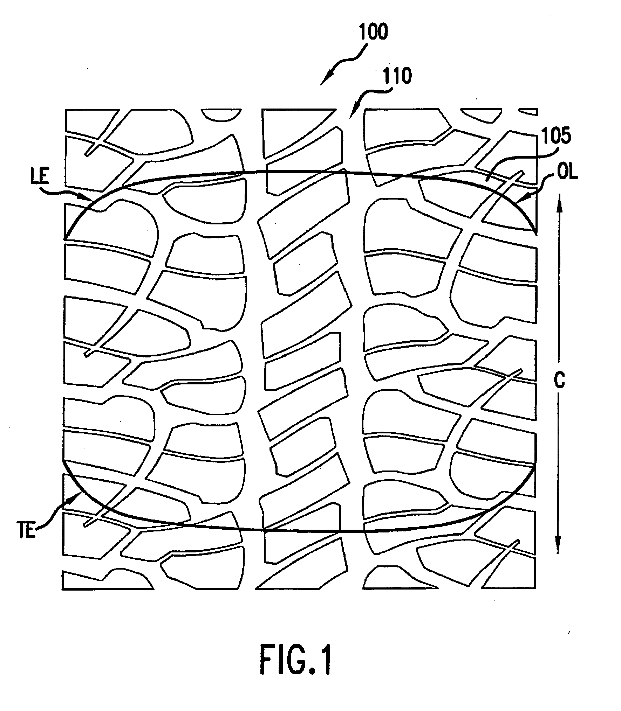

Fig. 1 illustrates an exemplary embodiment of a tread pattern that is subjected to an improvement in tread noise according to exemplary methods of the present invention.

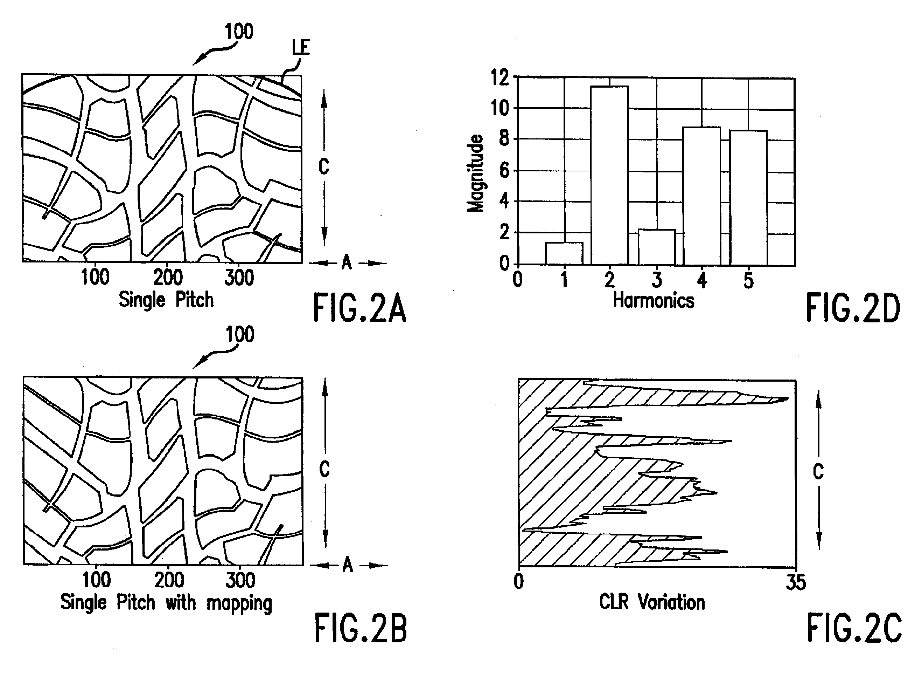

Figs. 2A- 2D are used to illustrate steps according to an exemplary method of the present invention. Fig. 2A provides a reference tread pattern ready for improvement in tread noise, Fig. 2B illustrates a mapping of such tread pattern, Fig. 2C illustrates the CLR (contact length ratio) variation for the mapped tread pattern, and Fig. 2D provides the harmonic content of the CLR variation of Fig. 2C.

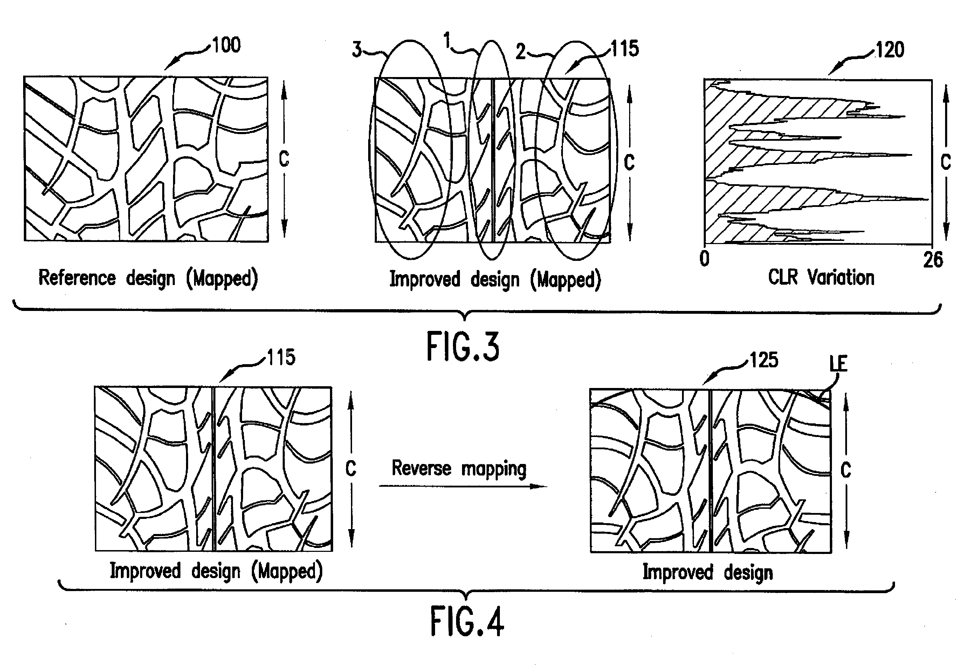

Fig. 3 provides an illustration of the reference tread design ready for improvement, the modified tread design resulting from changes made to the mapped version of the reference tread design, and the CLR variation of the modified tread design.

Fig. 4 provides the mapped version of the modified design and the resulting design when the mapping is reversed.

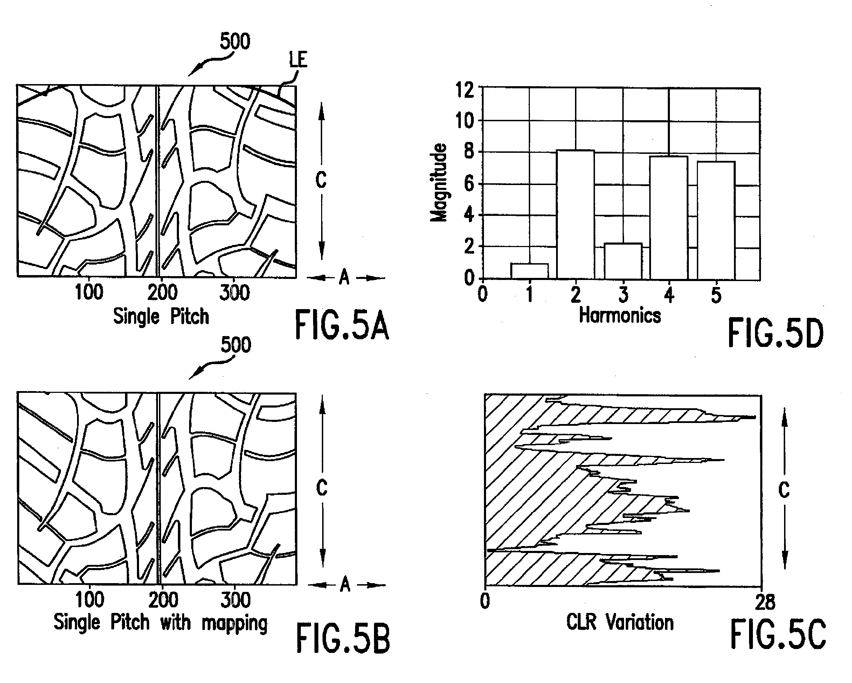

Figs. 5A- 5D are used to illustrate steps according to an exemplary method of the present invention. Fig. 5A illustrates a new pattern that results from modifying the reference pattern of Fig. 1 according to the methods of the present invention. Fig. 5B illustrates a mapping of such new tread pattern, Fig. 5C illustrates the CLR variation determined from the mapping of the new tread pattern, and Fig. 5D provides the harmonic content of the CLR variation of Fig. 5C.

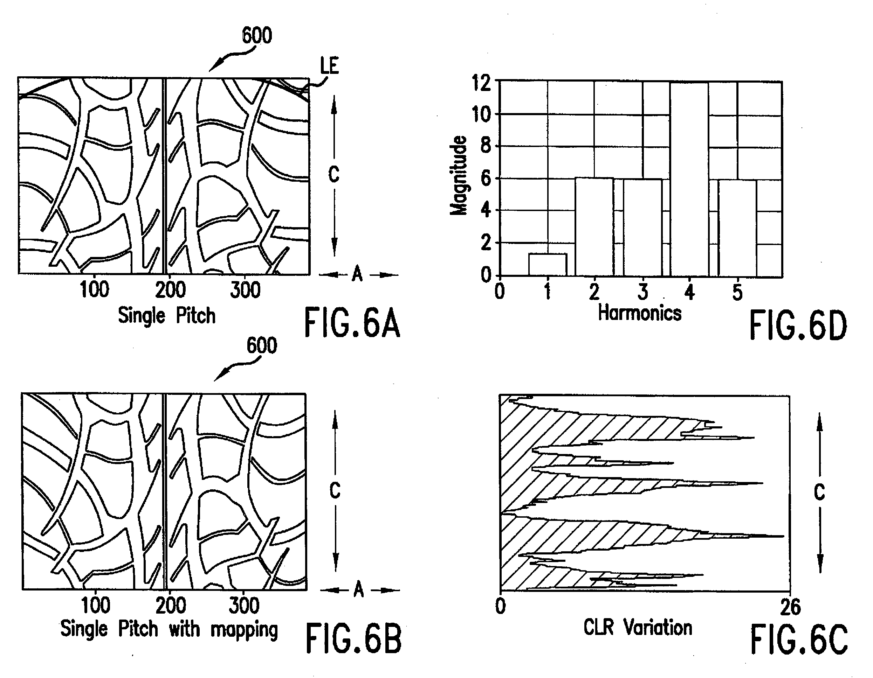

Figs. 6A- 6D are used to illustrate steps according to an exemplary method of the present invention. Fig. 6A illustrates a new pattern that results from modifying the reference pattern of Fig. 1 according to the methods of the present invention. Fig. 6B illustrates a mapping of such new tread pattern, Fig. 6C illustrates the CLR variation determined from the mapping of the new tread pattern, and Fig. 6D provides the harmonic content of the CLR variation of Fig. 6C.

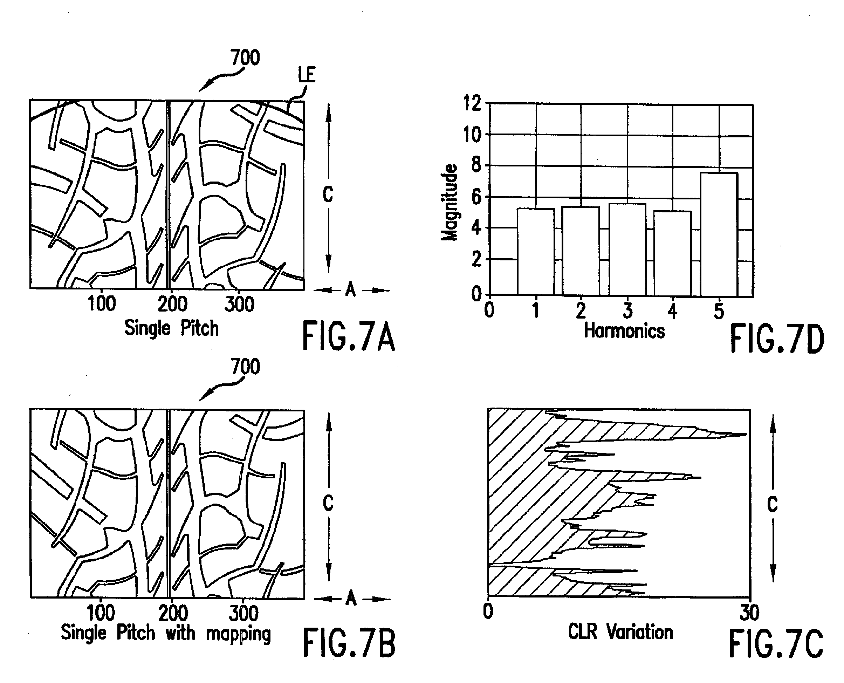

Figs. 7A- 7D are used to illustrate steps according to an exemplary method of the present invention. Fig. 7A illustrates a new pattern that results from modifying the reference pattern of Fig. 1 according to the methods of the present invention. Fig. 7B illustrates a mapping of such new tread pattern, Fig. 7C illustrates the CLR variation determined from the mapping of the new tread pattern, and Fig. 7D provides the harmonic content of the CLR variation of Fig. 7C.

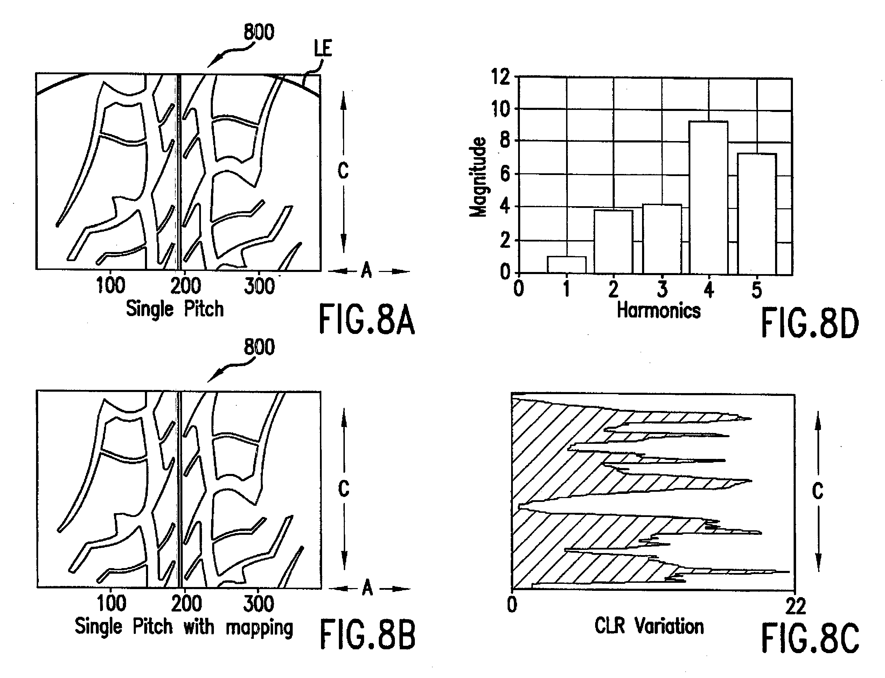

Figs. 8A- 8D are used to illustrate steps according to an exemplary method of the present invention. Fig. 8A illustrates a new pattern that results from modifying the reference pattern of Fig. 1 according to the methods of the present invention. Fig. 8B illustrates a mapping of such new tread pattern, Fig. 8C illustrates the CLR variation determined from the mapping of the new tread pattern, and Fig. 8D provides the harmonic content of the CLR variation of Fig. 8C.

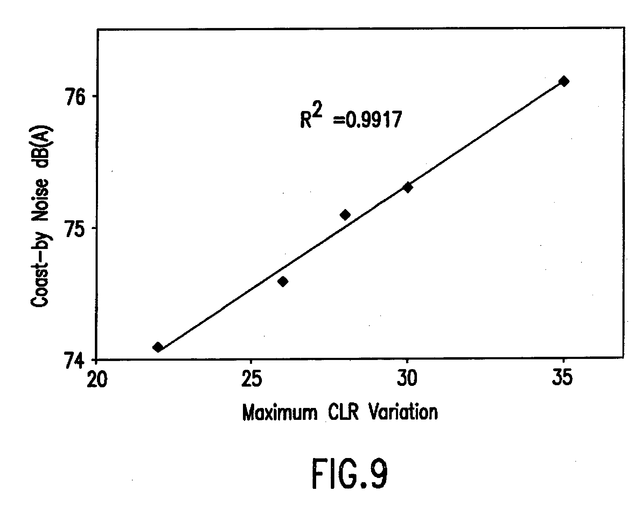

Fig. 9 provides a plot of the measured coast-by noise (vertical-axis) versus the maximum CLR variation for (horizontal-axis) for the reference and new designs.

## DETAILED DESCRIPTION

The present invention provides a method of improving tire tread noise including an identification of one or more specific locations where particular modifications can be made in order to optimize the tread noise associated with a subject tread pattern. For purposes of describing the invention, reference now will be made in detail to embodiments of the invention, one or more examples of which are illustrated in the drawings. Each example is provided by way of explanation of the invention, not limitation of the invention. For instance, features illustrated or described as part of one embodiment, can be used with another embodiment to yield a still further embodiment. Thus, it is intended that the present invention covers such modifications and variations as come within the scope of the appended claims and their equivalents.

As used herein, "pitch" means a section of the tread pattern in the circumferential direction that is repeated around the outer circumference of the tire.

While the precise mechanism by which a tread pattern generates noise during tire operation can still be further explored, the inventors believe there are at least two reasons noise is generated. First, the air that is within the grooves of the tread pattern as well as the air surrounding those grooves is compressed and pushed out of the grooves as the tire rolls along a road surface. Second, contact between the tire tread and the road surface excites the tire - including the tread features - which in turn creates sound by inducing vibration or waves in the air. Part of the inventors' discovery is that by minimizing variation in the contact between the tread and the surface (i.e. road surface), the noise generated by a tire tread can be substantially improved.

Fig. 1 illustrates a tire tread 100 arbitrarily chosen for an improvement in tire tread noise. Tread 100 may be an image of a pattern taken from an actual tire for which noise improvement is sought. Alternatively, tread 100 may be an image of a proposed pattern for which tread noise optimization is desirable. In such case, the image of the proposed pattern can be optimized as described herein before construction of molds or actual tires bearing the proposed pattern. Accordingly, substantial savings in the development of a tread pattern can be accomplished using the present invention.

Line OL represents the outline of the area of the tire tread that is in contact with the road surface (i.e., footprint) when operating under a load with the tire supported on a flat road surface. The top line LE represents the leading edge of the footprint while the bottom line represents the trailing edge TE of the footprint. As the tire rolls forward during operation, the tire tread can be considered to continuously enter the outline OL of the footprint along leading edge LE while exiting the outline OL along the trailing edge TE. Along leading edge LE, each point on the surface of a block (such as block 105) will impact the road surface while all points along the grooves (such as groove 110) will not impact the road surface.

The image of tread 100 can be digitized into pixels (or e.g., points) with each pixel along leading edge LE represented by a single pixel. This model allows the determination of how much physical contact is occurring between the tread and the road surface along the leading edge LE as the tire rolls along the road surface. For example, the amount of impact of tread 100 at each location $i$ along the circumferential direction C can be defined herein as the contact length ratio or CLR and can be determined by the following equation:

$$(1) \qquad CLR_i = 1 - \frac{C_i}{n}$$

In equation 1, $CLR_i$ represents the contact length ratio at a given location $i$ along the circumferential direction C of the tire, $C_i$ represents the total number of pixels (or points) on the block surface along the leading edge LE at a given location $i$ along the circumferential direction, and n represents the total number of pixels (or points) on the leading edge LE. Accordingly, a higher CLR value for a given cross section at a location $i$ along the circumferential direction represents a lower amount of contact between the tread pattern and the road surface while a lower CLR values represents a higher amount of contact between the tread pattern and the road surface. A slick tire, such as a racing tire, will have no variation in CLR and, therefore, no noise generated by a tread pattern.

Other equations can be created for calculating CLR. For example, the CLR at a given location $i$ ($CLR_i$) - could be equated directly with the fraction in equation 1. While various calculations could be used, the objective is to determine a $CLR_i$ such that it provides a measurement of how much physical contact is occurring between the tread and the road surface for the leading edge LE at a given point along the circumferential direction as the tire rolls along the road surface.

The inventors have determined that the variation in $CLR_i$ along the circumferential direction is the main source of tire tread noise. In other words, the variation in the amount of physical contact between the tread and the road surface along the leading edge LE as the tire moves by rotation along the surface is a primary contributor to tread noise. The calculation of CLR at each point along the circumferential direction can be expressed mathematically as follows:

$$(2) \qquad CLR_i \text{ where } i = 1, 2, 3, \ldots N$$

where N represents the number of locations along the circumferential direction of the tread pattern that are selected for determination of CLR. The value of N can be chosen arbitrarily such that any length of the subject tread pattern can be evaluated for tread noise optimization. For example, N can be selected so that a single pitch of the tread pattern is evaluated. However, other portions of the tread pattern may also be selected. Regardless, minimizing the variation in $CLR_i$ along the circumferential direction of the tread pattern can reduce the level of tread noise associated with such tread pattern. Exemplary methods of using CLR to minimize such variation are now described.

Fig. 2A represents a single pitch of tread pattern 100 with line LE again representing the leading edge of the footprint when the tire is operating under load. To aid the analysis developed by the inventors, Fig. 2B represents the same pitch of tread pattern 100 but the pattern has been shifted - referring to herein as "mapped" or "mapping" - in order to represent leading edge LE as a straight line. Accordingly, a cross-section at each location $i$ along the circumferential direction eventually represents the leading edge LE of tread 100 as the tire rolls along the road surface. For each such cross-section at each location $i$, a $CLR_i$ can be calculated as described above.

For purposes of evaluation, the variation in $CLR_i$ for a given pitch of tread 100 as shown in Figs. 2A and 2B can be calculated in several different ways. For example, the variation can be obtained by calculating $CLR_i$ at each location $i$ along a given pitch of tread pattern 100, subtracting the average CLR for the entire pitch, and then multiplying the result by 100. Alternatively, and by way of further example, the variation for each point i could be determined by calculating $CLR_i$ at each location i along a given pitch of tread pattern 100, subtracting the lowest $CLR_i$ for the entire pitch, and then multiplying the result by 100.

$$(3) \qquad CLR_{variation\ at\ i} = (CLR_i - CLR_{minimum}) * 100$$

where $CLR_{variation\ at\ i}$ represents the CLR variation at each point $i$ along the selected portion of the tread, $CLR_i$ represents the contact length ratio at a given location $i$ along the circumferential direction C of the tire, and $CLR_{minimum}$ represents the smallest value of $CLR_i$ calculated along the selected tread portion. The approach in equation 3 was used to calculate the CLR variation for illustration here, which is shown in the plot of Fig. 2C. Regardless of approach, the objective is to provide a means by which the variation in $CLR_i$ values across a given portion of the tread pattern - such as a single pitch - can be analyzed. Fig. 2D provides the harmonic contents to the CLR variation shown in Fig. 2C. Figs. 2B and 2C are placed side by side so that the reader can compare the mapped tread pattern 100 directly with the CLR variation for such pattern.

As illustrated in Fig. 2C, tread pattern 100 has significant variations in CLR values across the pitch shown in Figs. 2A and 2B. For example, the maximum CLR variation is about 35 and multiple peaks and valleys are present along the curve. These peaks and valleys correspond to locations in the tread pattern where the tread pattern has relatively more voids (i.e. grooves) or relatively more contact surfaces (i.e. blocks or other contacts).

The peak at about 3 5, for example, represents a point in tread pattern 100 along circumferential direction C where the highest voids are present. In order to reduce CLR variation, and therefore tread noise, tread pattern 100 should be modified at this location in a manner that reduces the voids and provides more contact surfaces. Conversely, the valley at about 0 represents the point where the highest amount of contact surface is present in tread pattern 100. Thus, in order to reduce CLR variation, and therefore tread noise, tread pattern 100 should be modified at this location in a manner that increases the voids and reduces the amount of contact surfaces. Upon making modifications to the tread pattern 100 in this manner, the CLR variation can then be recalculated and the process repeated until the CLR variation is reduced to an acceptable level.

Fig. 3 is provided to further illustrate the process of modifying a tread pattern in order to reduce tread noise by reducing the CLR variation. Specifically, tread 100 again represents a reference design for which modification to reduce tread noise is proposed. As illustrated in Fig. 3, the pattern of tread 100 has been mapped so that each leading edge LE that is created as the tire rolls across the ground surface can be represented as a straight line.

Tread 115 represents a modification of tread 100 in order to reduce the CLR variation. More specifically, in the modified design, lateral grooves in region 1 have been further disconnected and are oriented more towards a circumferential (i.e. vertical as viewed on the page) direction. In region 2, the right side of the lateral grooves has been shifted downward and the left side of the grooves are more circumferentially (i.e. vertically) oriented. The lateral groove width on the right side of region 2 has also been reduced. Region 3 has been modified according to the changes made to region 2.

Still referring to Fig. 3, plot 120 represents the new calculation of CLR variation for the modified tread pattern 115. As shown, for example, the new maximum CLR variation for modified tread pattern 115 is now 26, which is significantly less than the value of about 35 that was calculated for tread pattern 100. Fig. 4 represents the process of reverse mapping the modified tread pattern 115 in order to illustrate and thereby visualize the actual tread pattern 125 that results from adjusting the CLR variation as described herein.

Accordingly, using the methodology described herein to reduce the CLR variation, the inventors proposed four new tread patterns based on modification of tread pattern 100 in order to optimize the CLR variation and, therefore, tread noise. These new patterns 500, 600, 700, and 800 are set forth in Figs. 5A, 6A, 7A, and 8A. A visual determination of the changes to create the new tread patterns can be determined by comparison with the reference tread pattern 100 of Fig. 1. Each new pattern was mapped in order to represent leading edge LE as a straight line as previously described. The mapped patterns are shown in Figs. 5B, 6B, 7B, and 8B.

Using the methods described herein, the CLR variation of each proposed pattern 500, 600, 700 and 800 was calculated and plotted as set forth in Figs. 5C, 6C, 7C, and 8C respectively. For direct comparison by the reader, these plots are set forth adjacent to the mapped tread patterns in Figs. 5B, 6B, 7B, and 8B. The harmonic content of each such plot is represented in Figs. 5D, 6D, 7D, and 8D.

Referring now to the plots of CLR variation in Figs. 5C, 6C, 7C, and 8C, it can be seen that the CLR variations for the new proposed treads 500, 600, 700, and 800 range from 22 to 30. Thus, the CLR variation of the original tread 100 has been reduced and, in the case of tread pattern 800, the reduction is very substantial. Therefore, the changes to the tread patterns successfully reduced the CLR variation. It should be understood that the process could be repeated iteratively for each pattern in an effort to achieve additional CLR variation reductions if desired.

As stated, the harmonic content of the CLR variation of each proposed new pattern 500, 600, 700, and 800 is shown in Figs. 5D, 6D, 7D, and 8D. In selecting among the patterns, a designer may wish to consider the harmonics of the CLR variation as well as the CLR variation itself. For example, Fig. 8C indicates a low CLR variation for pattern 800 but Fig. 8D reveals a relatively large contribution from the fourth harmonic. Accordingly, for certain applications, pattern 800 may not be the most appropriate despite the lower CLR variation and pattern 500 or 700 might be chosen instead. Alternatively, the designer might try another iteration of different modifications to tread pattern 100 to create yet additional new patterns also having a lower CLR variation but with different harmonics.

Tires having substantially the tread patterns of treads 100, 500, 600, 700, and 800 were constructed and a vehicle coast-by noise test was conducted as defined by the Directive 2001/43/EC of the European Parliament of the Council of June 27, 2001. Fig. 9 provides a plot of the CLR variation for the referenced and proposed designs versus the measured coast-by noise. As indicated by the plot, reduction in the CLR variation clearly correlates with a reduction in the tread noise created by a tire and, therefore, the utility of the invention is demonstrated.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art using the teachings disclosed herein.

**Claims**

1. A method for improving the noise created by the tread pattern of a tire, the tread pattern having a circumferential direction, the method comprising the steps of:

   selecting a portion of the tread pattern for evaluation;
   determining the variation in contact length ratio along the circumferential direction for the selected portion of the tread pattern; and
   reducing the variation in contact length ratio by modifying the tread pattern.

2. A method for improving the noise created by the tread pattern of a tire as in claim 1, wherein said determining step further comprises calculating the contact length ratio at each point along the circumferential direction of the selected portion of the tread pattern.

3. A method for improving the noise created by the tread pattern of a tire as in claim 1, wherein said determining step further comprises:

   mapping the selected portion of the tread pattern; and
   calculating the contact length ratio at each point along the circumferential direction of the mapped tread portion of the tread pattern.

4. A method for improving the noise created by the tread pattern of a tire as in claim 1, where said reducing step further comprises adding contact surfaces to the tread pattern at one or more points along the circumferential direction of the selected portion based on the variation in contact length ratio provided by said determining step.

5. A method for improving the noise created by the tread pattern of a tire as in claim 1, where said reducing step further comprises removing contact surfaces from the tread pattern at one or more points along the circumferential direction of the selected portion based on the variation in contact length ratio provided by said determining step.

6. A method for improving the noise created by the tread pattern of a tire as in claim 1, further comprising the step of determining the point along the circumferential direction of the selected portion of the tread pattern at which maximum variation in the contact length ratio occurs.

7. A method for improving the noise created by the tread pattern of a tire as in claim 1, further comprising the step of determining the point along the circumferential direction of the selected portion of the tread pattern at which minimum variation in the contact length ratio occurs.

8. A method for improving the noise created by the tread pattern of a tire as in claim 1, wherein the portion of the tread pattern from said selecting step is one pitch of the tread pattern.

9. A method for improving the noise created by the tread pattern of a tire as in claim 1, further comprising the step of repeating said steps of selecting, determining, and reducing until an acceptable variation in contact length ratio is achieved for the selected portion of the tread pattern.

10. A method for improving the noise created by the tread pattern of a tire as in claim 1, where the contact length ratio at given point along the circumferential direction of the tread pattern is defined as:

$$CLR_i = 1 - C_i/n$$

   where

   $CLR_i$ = the contact length ratio at a given location $i$ along the circumferential direction
   $C_i$ = the total number of or points contacting a road surface along a leading edge of the tread pattern at a given location $i$ along the circumferential direction
   $n$ = the total number of points along the leading edge

11. A method for improving the noise created by the tread pattern of a tire as in claim 1, wherein said determining step further comprises:

mapping the selected portion of the tread pattern;
calculating the contact length ratio at each point along the circumferential direction of the mapped tread portion of the tread pattern; and
plotting the results of said calculating step for each point along the circumferential direction of the mapped tread portion of the tread pattern.

12. A tire constructed according to the method of claim 1.

13. A method of improving tire tread noise, the method comprising the steps of:

detennining contact length ratios along a selected portion of the tread;
comparing the contact length ratios to determine locations of maximum and minimum variations in the contact length ratios along a circumferential direction of the tread; and
optimizing the noise to be produced in operation of the tire tread by modifying the maximum and minimum variations in the contact length ratios.

14. A method of improving tire tread noise as in claim 13, wherein said optimizing step further comprises the step of modifying the tread pattern so as to change the contact length ratios at the locations of the maximum and minimum variations.

15. A method of improving tire tread noise as in claim 14, wherein said optimizing step further comprises adding contact surfaces to the tread pattern at one or more locations along the circumferential direction.

**Patentansprüche**

1. Verfahren zur Verbesserung des durch das Laufflächenmuster eines Reifens erzeugten Geräuschs, wobei das Laufflächenmuster eine Umfangsrichtung hat, wobei das Verfahren die folgenden Schritte umfasst:

das Auswählen eines Abschnitts des Laufflächenmusters zur Einschätzung;
das Bestimmen der Variation bei dem Aufstandslängenverhältnis entlang der Umfangsrichtung für den ausgewählten Abschnitt des Laufflächenmusters; und
das Verringern der Variation bei dem Aufstandslängenverhältnis durch das Modifizieren des Laufflächenmusters.

2. Verfahren zur Verbesserung des durch das Laufflächenmuster eines Reifens erzeugten Geräuschs nach Anspruch 1, wobei der Bestimmungsschritt ferner das Berechnen des Aufstandslängenverhältnisses an jedem Punkt entlang der Umfangsrichtung des ausgewählten Abschnitts des Laufflächenmusters umfasst.

3. Verfahren zur Verbesserung des durch das Laufflächenmuster eines Reifens erzeugten Geräuschs nach Anspruch 1, wobei der Bestimmungsschritt ferner Folgendes umfasst:

das Abbilden des ausgewählten Abschnitts des Laufflächenmusters; und
das Berechnen des Aufstandslängenverhältnisses an jedem Punkt entlang der Umfangsrichtung des abgebildeten Laufflächenabschnitts des Laufflächenmusters.

4. Verfahren zur Verbesserung des durch das Laufflächenmuster eines Reifens erzeugten Geräuschs nach Anspruch 1, wobei der Verringerungsschritt ferner das Hinzufügen von Aufstandsflächen zu dem Laufflächenmuster an einem oder mehreren Punkten entlang der Umfangsrichtung des ausgewählten Abschnitts auf der Grundlage der durch den Bestimmungsschritt bereitgestellten Variation bei dem Aufstandslängenverhältnis umfasst.

5. Verfahren zur Verbesserung des durch das Laufflächenmuster eines Reifens erzeugten Geräuschs nach Anspruch 1, wobei der Verringerungsschritt ferner das Entfernen von Aufstandsflächen von dem Laufflächenmuster an einem oder mehreren Punkten entlang der Umfangsrichtung des ausgewählten Abschnitts auf der Grundlage der durch den Bestimmungsschritt bereitgestellten Variation bei dem Aufstandslängenverhältnis umfasst.

6.  Verfahren zur Verbesserung des durch das Laufflächenmuster eines Reifens erzeugten Geräuschs nach Anspruch 1, das ferner den Schritt des Bestimmens desjenigen Punktes entlang der Umfangsrichtung des ausgewählten Abschnitts des Laufflächenmusters umfasst, an dem eine maximale Variation bei dem Aufstandslängenverhältnis auftritt.

7.  Verfahren zur Verbesserung des durch das Laufflächenmuster eines Reifens erzeugten Geräuschs nach Anspruch 1, das ferner den Schritt des Bestimmens desjenigen Punktes entlang der Umfangsrichtung des ausgewählten Abschnitts des Laufflächenmusters umfasst, an dem eine minimale Variation bei dem Aufstandslängenverhältnis auftritt.

8.  Verfahren zur Verbesserung des durch das Laufflächenmuster eines Reifens erzeugten Geräuschs nach Anspruch 1, wobei der Abschnitt des Laufflächenmusters aus dem Auswahlschritt eine Teilung des Laufflächenmusters ist.

9.  Verfahren zur Verbesserung des durch das Laufflächenmuster eines Reifens erzeugten Geräuschs nach Anspruch 1, das ferner den Schritt des Wiederholens der Schritte des Auswählens, Bestimmens und Verringerns umfasst, bis eine annehmbare Variation bei dem Aufstandslängenverhältnis für den ausgewählten Abschnitt des Laufflächenmusters erreicht ist.

10. Verfahren zur Verbesserung des durch das Laufflächenmuster eines Reifens erzeugten Geräuschs nach Anspruch 1, wobei das Aufstandslängenverhältnis an einem gegebenen Punkt entlang der Umfangsrichtung des Laufflächenmusters definiert ist als:

$$CLR_i = 1 - \frac{C_i}{n} \, ,$$

wobei

$CLR_i$ = das Aufstandslängenverhältnis an einer gegebenen Position i entlang der Umfangsrichtung
$C_i$ = die Gesamtanzahl der Punkte, die eine Straßenoberfläche entlang einer vorderen Kante des Laufflächenmusters an einer gegebenen Position i entlang der Umfangsrichtung berühren
n = die Gesamtanzahl der Punkte entlang der vorderen Kante.

11. Verfahren zur Verbesserung des durch das Laufflächenmuster eines Reifens erzeugten Geräuschs nach Anspruch 1, wobei der Bestimmungsschritt ferner Folgendes umfasst:

das Abbilden des ausgewählten Abschnitts des Laufflächenmusters;
das Berechnen des Aufstandslängenverhältnisses an jedem Punkt entlang der Umfangsrichtung des abgebildeten Laufflächenabschnitts des Laufflächenmusters; und
das Aufzeichnen der Ergebnisse des Berechnungsschritts für jeden Punkt entlang der Umfangsrichtung des abgebildeten Laufflächenabschnitts des Laufflächenmusters.

12. Reifen, der nach dem Verfahren von Anspruch 1 aufgebaut ist.

13. Verfahren zur Verbesserung des Reifen-Laufflächengeräuschs, wobei das Verfahren die folgenden Schritte umfasst:

das Bestimmen von Aufstandslängenverhältnissen entlang eines ausgewählten Abschnitts der Lauffläche;
das Vergleichen der Aufstandslängenverhältnisse, um Positionen von maximalen und minimalen Variationen bei den Aufstandslängenverhältnissen entlang der Umfangsrichtung der Lauffläche zu bestimmen; und
das Optimieren des im Betrieb des Reifens zu erzeugenden Geräuschs durch das Modifizieren der maximalen und der minimalen Variationen bei den Aufstandslängenverhältnissen.

14. Verfahren zur Verbesserung des durch das Reifen-Laufflächengeräuschs nach Anspruch 13, wobei der Optimierungsschritt ferner den Schritt des Modifizierens des Laufflächenmusters umfasst, um so die Aufstandslängenverhältnisse an den Positionen der maximalen und minimalen Variationen zu verändern.

15. Verfahren zur Verbesserung des durch das Reifen-Laufflächengeräuschs nach Anspruch 14, wobei der Optimierungsschritt ferner das Hinzufügen von Aufstandsflächen zu dem Laufflächenmuster an einer oder mehreren Positionen entlang der Umfangsrichtung umfasst.

**Revendications**

1. Procédé d'atténuation du bruit créé par le dessin de bande de roulement d'un pneumatique, le dessin de bande de roulement ayant une direction circonférentielle, le procédé comprenant les étapes suivantes :

   la sélection d'une partie du dessin de bande de roulement pour évaluation ;
   la détermination de la variation du rapport de longueur de contact le long de la direction circonférentielle pour la partie sélectionnée du dessin de bande de roulement ; et
   la réduction de la variation du rapport de longueur de contact par modification du dessin de bande de roulement.

2. Procédé d'atténuation du bruit créé par le dessin de bande de roulement d'un pneumatique selon la revendication 1, dans lequel ladite étape de détermination comprend en outre le calcul du rapport de longueur de contact en chaque point le long de la direction circonférentielle de la partie sélectionnée du dessin de bande de roulement.

3. Procédé d'atténuation du bruit créé par le dessin de bande de roulement d'un pneumatique selon la revendication 1, dans lequel ladite étape de détermination comprend en outre :

   l'établissement de la cartographie de la partie sélectionnée du dessin de bande de roulement ; et
   le calcul du rapport de longueur de contact en chaque point le long de la direction circonférentielle de la partie de bande de roulement cartographiée du dessin de bande de roulement.

4. Procédé d'atténuation du bruit créé par le dessin de bande de roulement d'un pneumatique selon la revendication 1, dans lequel ladite étape de réduction comprend en outre l'ajout de surfaces de contact au dessin de bande de roulement en un ou plusieurs points le long de la direction circonférentielle de la partie sélectionnée basé sur la variation du rapport de longueur de contact fournie par ladite étape de détermination.

5. Procédé d'atténuation du bruit créé par le dessin de bande de roulement d'un pneumatique selon la revendication 1, dans lequel ladite étape de réduction comprend en outre la suppression de surfaces de contact du dessin de bande de roulement en un ou plusieurs points le long de la direction circonférentielle de la partie sélectionnée basé sur la variation du rapport de longueur de contact fournie par ladite étape de détermination.

6. Procédé d'atténuation du bruit créé par le dessin de bande de roulement d'un pneumatique selon la revendication 1, comprenant en outre l'étape de détermination du point le long de la direction circonférentielle de la partie sélectionnée du dessin de bande de roulement auquel il se produit la variation maximale du rapport de longueur de contact.

7. Procédé d'atténuation du bruit créé par le dessin de bande de roulement d'un pneumatique selon la revendication 1, comprenant en outre l'étape de détermination du point le long de la direction circonférentielle de la partie sélectionnée du dessin de bande de roulement auquel il se produit la variation minimale du rapport de longueur de contact.

8. Procédé d'atténuation du bruit créé par le dessin de bande de roulement d'un pneumatique selon la revendication 1, dans lequel la partie du dessin de bande de roulement provenant de ladite étape de sélection est un pas du dessin de bande de roulement.

9. Procédé d'atténuation du bruit créé par le dessin de bande de roulement d'un pneumatique selon la revendication 1, comprenant en outre l'étape de répétition desdites étapes de sélection, détermination et réduction jusqu'à ce qu'une variation acceptable du rapport de longueur de contact soit atteinte pour la partie sélectionnée du dessin de bande de roulement.

10. Procédé d'atténuation du bruit créé par le dessin de bande de roulement d'un pneumatique selon la revendication 1, dans lequel le rapport de longueur de contact en un point donné le long de la direction circonférentielle du dessin de bande de roulement est défini par :

$$CLR_i = 1 - \frac{C_i}{n}$$

où

CLR$_i$ = le rapport de longueur de contact en un endroit donné i le long de la direction circonférentielle,
C$_i$ = nombre total de points en contact avec une surface routière le long d'un bord d'attaque du dessin de bande de roulement en un endroit donné i le long de la direction circonférentielle,
n = nombre total de points le long du bord d'attaque.

11. Procédé d'atténuation du bruit créé par le dessin de bande de roulement d'un pneumatique selon la revendication 1, dans lequel ladite étape de détermination comprend en outre :

l'établissement d'une cartographie de la partie sélectionnée du dessin de bande de roulement ;
le calcul du rapport de longueur de contact en chaque point le long de la direction circonférentielle de la partie de bande de roulement cartographiée du dessin de bande de roulement ; et
le traçage des résultats de ladite étape de calcul pour chaque point le long de la direction circonférentielle de la partie de bande de roulement cartographiée du dessin de bande de roulement.

12. Pneumatique construit selon le procédé de la revendication 1.

13. Procédé d'atténuation du bruit de bande de roulement de pneumatique, le procédé comprenant les étapes suivantes :

la détermination de rapports de longueur de contact le long d'une partie sélectionnée de la bande de roulement ;
la comparaison des rapports de longueur de contact pour déterminer les endroits de variations maximale et minimale des rapports de longueur de contact le long d'une direction circonférentielle de la bande de roulement ; et
l'optimisation du bruit devant être produit lors du fonctionnement de la bande de roulement de pneumatique par modification des variations maximale et minimale des rapports de longueur de contact.

14. Procédé d'atténuation du bruit de bande de roulement de pneumatique selon la revendication 13, dans lequel ladite étape d'optimisation comprend en outre l'étape consistant à modifier le dessin de bande de roulement de façon à modifier les rapports de longueur de contact aux endroits des variations maximale et minimale.

15. Procédé d'atténuation du bruit de bande de roulement de pneumatique selon la revendication 14, dans lequel ladite étape d'optimisation comprend en outre l'ajout de surfaces de contact au dessin de bande de roulement en un ou plusieurs endroits le long de la direction circonférentielle.

FIG.1

Single Pitch

FIG.2A

Single Pitch with mapping

FIG.2B

Harmonics

FIG.2D

CLR Variation

FIG.2C

EP 2 454 693 B1

Reference design (Mapped)

Improved design (Mapped)

CLR Variation

**FIG.3**

Improved design (Mapped)

Reverse mapping →

Improved design

**FIG.4**

EP 2 454 693 B1

500

LE

C

A

100        200        300
Single Pitch

**FIG.5A**

500

C

A

100        200        300
Single Pitch with mapping

**FIG.5B**

12
10
8
6
4
2
0

Magnitude

0    1    2    3    4    5
Harmonics

**FIG.5D**

C

0                        28
CLR Variation

**FIG.5C**

EP 2 454 693 B1

FIG.6A

Single Pitch

FIG.6B

Single Pitch with mapping

FIG.6D

Harmonics

FIG.6C

CLR Variation

EP 2 454 693 B1

**FIG.7A** — Single Pitch (100, 200, 300; 700; LE; C; A)

**FIG.7B** — Single Pitch with mapping (100, 200, 300; 700; C; A)

**FIG.7C** — CLR Variation (0, 30; C)

**FIG.7D** — Harmonics (0, 1, 2, 3, 4, 5); Magnitude (0, 2, 4, 6, 8, 10, 12)

EP 2 454 693 B1

800

LE

C

A →

100    200    300
Single Pitch

**FIG.8A**

800

C

A →

100    200    300
Single Pitch with mapping

**FIG.8B**

12
10
8
6
4
2
0

Magnitude

0    1    2    3    4    5
Harmonics

**FIG.8D**

C

0                    22
CLR Variation

**FIG.8C**

EP 2 454 693 B1

FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4727501 A

- US 4788651 A

**Non-patent literature cited in the description**

- *Directive 2001/43/EC of the European Parliament of the Council,* 27 June 2001